# EUROPEAN PATENT SPECIFICATION

(11) **EP 1 783 600 B1**
(45) Date of publication and mention of the grant of the patent: **14.08.2013**
(21) Application number: 06121986.1
(22) Date of filing: 09.10.2006
(51) Int. Cl.: G06F 3/16

(54) **Method for arbitrating audio data output apparatuses**
Verfahren zur Arbitrierung von Tondatenausgabegeräten
Procédé d'arbitrage d'appareils d'émission de données audio

(30) Priority: 09.10.2005 CN 200510113786
(43) Date of publication of application: 09.05.2007
(73) Proprietor: HTC Corporation, Taoyuan County 330 (TW)
(72) Inventor: Wang, John C., Taoyuan City (TW)
(74) Representative: Viering, Jentschura & Partner

(56) References cited:
- EP-A- 1 455 477
- US-A- 5 475 872
- US-A- 5 703 794
- US-A1- 2002 196 134

## Description

### BACKGROUND

### Field of Invention

The present invention relates to an arbitrating method used to determine an audio output apparatus. More particularly, the present invention relates to an arbitrating method used to determine an audio output apparatus in a portable electronic device.

### Description of Related Art

US 2005/0159833 A1 relates to a system for processing a first audio data stream and at least a second audio data stream to produce separate audio output concurrently audible to a user and corresponding to each audio data stream and a method thereof.

A wide variety of electronic devices, such as personal computers (PC), personal digital assistants (PDA), digital cameras and mobile phones, are used by people today. Progress in design and manufacturing techniques has made these electronic devices increasingly smaller and more convenient to carry. For example, an original mainframe system occupied a very large footprint, but nowadays desktops and laptops can be placed on the edge of a table and are very easy to carry.

The function of these miniature portable electronic devices can be further integrated into a single device. For example, a smart phone or an intelligent PDA can be used as a conventional mobile phone, a digital camera and even as a miniature computer.

Thus, the above-mentioned integrated electronic device with multiple functions can be able to not only execute various application programs as a PC but can also connect to and communicate with two major network systems, that is, a computer network system and a mobile phone network system. Besides, an electronic device with multiple functions can at least have an input apparatus used to input data, a display apparatus used to display images and an audio output apparatus used to provide audio output, wherein the audio output apparatus at least comprises a speaker and a receiver.

The speaker and the receiver have different characteristics. In general, the speaker is suitable to output higher volume and lower tone quality audio signals, and the receiver is suitable to output lower volume and higher tone quality audio signals. Therefore, in the electronic device, the audio generated from a conventional application program can be outputted by the speaker, but the speech sounds received in real-time speech communication should be outputted by the receiver to improve the tone quality of the communication. Real-time speech communication herein means not only conventional mobile phone communication but also speech communication executed by real-time speech application programs on the computer network. For example, the real-time speech application program can be MSN Messenger or Skype software executed in a conventional PC.

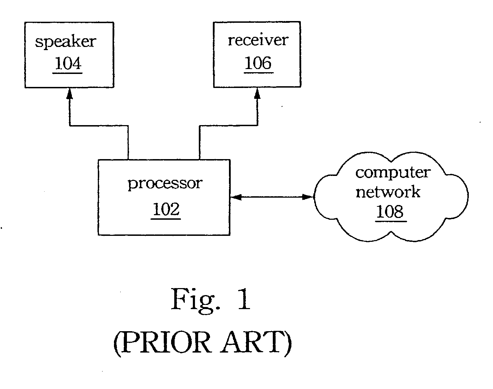

Fig. 1 shows a relation between a processor 102 and each of audio output apparatuses in the electronic device, wherein a processor 102 is connected to a speaker 104 and receiver 106. When the electronic device is operated, various application programs, such as a video and audio player program, a video game program and a real-time speech communication program for establishing speech communication on a computer network 108, can be executed by the processor 102. The different application programs have different requirements to output audio; therefore, it is important to determine a suitable audio output apparatus for each of the application programs to output audio in the electronic device.

### SUMMARY

The invention provides an electronic device with audio outputting function according to claim 9 and an arbitrating method according to claim 1. Further embodiments of the invention are described in the dependent claims.

It is therefore an objective of the present invention to provide an audio apparatus arbitrating method used in a portable electronic device.

It is another objective of the present invention to provide an arbitrating method to automatically determine one of the audio output apparatus in a portable electronic device.

It is still another objective of the present invention to provide an audio apparatus arbitrating method according to the usual practice of users in usage.

Furthermore, when the application program type is a real-time speech communications program, the type of audio data generated by the real-time speech communication program is determined in another embodiment of the present invention. The audio data is outputted by the speaker when the audio data is a ring tone, and the audio data is outputted by the receiver when the audio data is a speech sound. Speech sound can be also outputted by the speaker when the electronic device is used by several users at the same time. In addition, when real-time speech communication is carried out by the user, other audio data which is not generated by the real-time speech communication program can temporarily stop outputting audio to prevent interference in the speech communication.

### BRIEF DESCRIPTION OF THE DRAWINGS

These and other features, aspects, and advantages of the present invention will become better understood with regard to the following description, appended claims, and accompanying drawings, where:
Fig. 1 is a framework of an electronic device with several audio output apparatus;
Fig. 2A is a flow chart of a method according to an embodiment of the present invention; and
Fig. 2B is a flow chart of a method according to another embodiment of the present invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

it can be known from the foregoing discussion, the integrated portable electronic devices are increasingly becoming mainstream products of electronic manufacturers. The integrated portable electronic device not only executes various application programs as a PC but also establishes communication with a computer network and a mobile phone network. To support these functions, the integrated electronic devices described above usually have two audio output apparatus, such as a speaker and a receiver. The two different audio output apparatuses, the receiver and the speaker, have different characteristics. For example, the speaker is able to output a high volume voice and the receiver is able to output a better tone quality voice. Therefore, it is suitable to use a speaker when better sound effects are needed, and the receiver is suitable for real-time speech communication. For example, the speaker is suitable to output audio generated from a video player program or a video game program. If the audio generated from the video player program or the video game program is outputted by the receiver, the sound effects will be reduced. Oppositely, the receiver is suitable to output audio generated from a real-time speech communication program. If the audio generated from the real-time speech communication program is outputted by the speaker, the communication quality will be reduced. Therefore, the basic concept of the present invention is to selectively use one of the audio output apparatus to output audio data according to one type of application program that generates audio data.

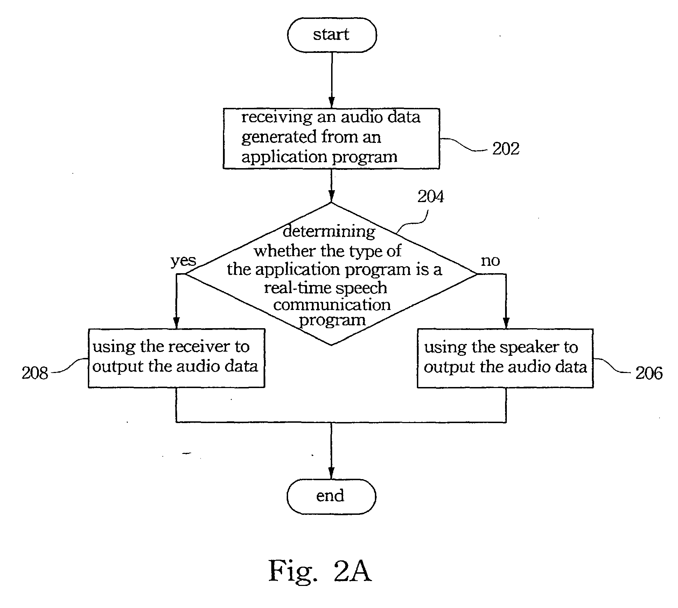

Fig. 2A shows a flow chart of an audio output apparatus arbitrating method according to an embodiment of the present invention. The method is applied in the processor of an electronic device, and the processor is able to execute various application programs and control at least two audio output apparatus including a speaker and a receiver in this embodiment. The receiver outputs audio generated from a real-time speech communication program, and the speaker outputs the audio generated from other application programs.

In the step 202, the processor receives an audio data generated from an application program. In the step 204, the type of the application program generating the audio data is determined. Step 204 can be accomplished by detecting the application program identification. In an embodiment of the present invention, the processor can detect the file name of the application program, for example, skype.exe, msnmsgr.exe or wmplayer.exe etc., executed in the electronic device and retrieve it as the identification of the application program, and then the processor utilizes a look-up-table for audio output apparatus corresponding to the identifications of the application programs to determine one of the audio output apparatus to perform the audio data. In another embodiment of the present invention, if the electronic device utilizes Windows^{®} as its operating system, the processor can detect either the class name or the application name of the application program executed in such an operating system and retrieve it as the identification of the application program, and then utilizes a look-up-table to determine one of the audio output apparatus to perform the audio data.

The types of application programs are divided into real-time speech communication programs and other application programs in this embodiment, but the classification of the types of application programs are not limited by this embodiment in practice. If the application program generating the audio is determined in Step 204 not to be a real-time speech communication program, step 206 is implemented. If the application program generating the audio is determined in Step 204 not to be a real-time speech communication program, step 208 is implemented. In step 206, the audio data is outputted by the speaker. In step 208, the audio data is outputted by the receiver.

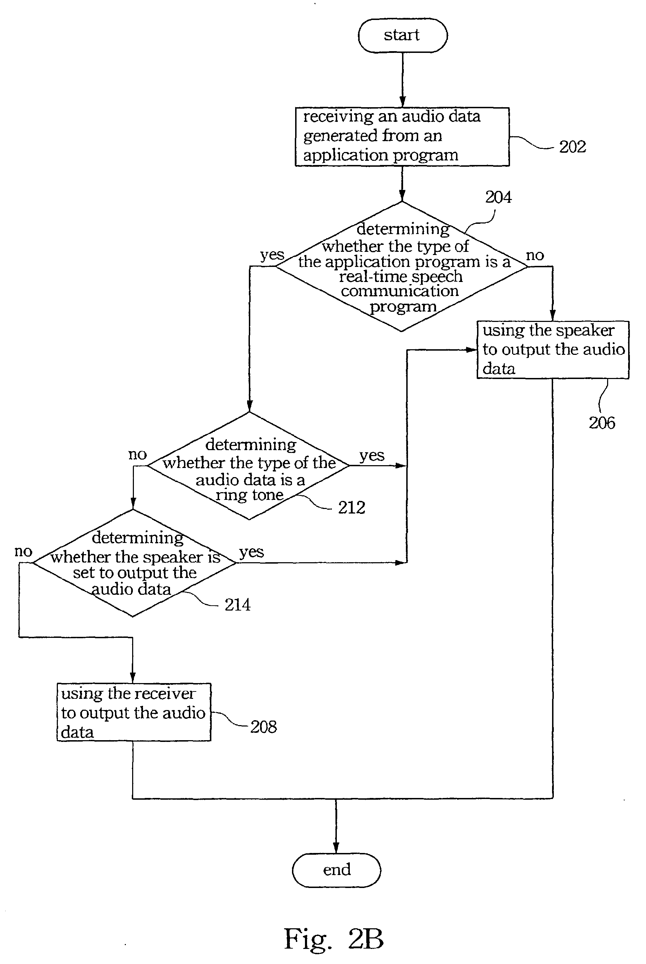

Fig. 2B shows a flow chart of a method according to another embodiment of the present invention. The basic steps of the audio output apparatus arbitrating method of the present invention have been shown in Fig. 2A. The flow chart shown in Fig. 2B includes some additional steps so that the method can be implemented with more convenience. The steps 202 and 204 shown in Fig. 2A and 2B are carry out the same operation in FIG. 2A. In this embodiment, If the application program generating the audio is determined in Step 204 not to be a real-time speech communication program, step 206 directs the device to output the audio data with the speaker. If the application program generating the audio is determined in Step 204 not to be a real-time speech communication program, step 212 is implemented.

In the step 212, the type of the audio data generated from the real-time speech communication program is further determined by the processor. The types of the audio data generated from the real-time speech communication program can be generally divided into a ring tone used to remind the user that a phone call is being generated and speech sound used to transmit the contents of the communication. Step 212 can be implemented by detecting the operating status issued from the application program generating the audio data, because the operating status records the type of audio data. Thus, when audio data generated by the real-time speech communication program is a ring tone, step 206 directs the electronic device to output the audio data with the speaker, and when the audio data generated by the real-time speech communication program is speech sound, step 214 is implemented to determine whether the speaker is set to play speech sound so that the speech sound can be heard by other audiences. In the step 214, if the result is "yes", the step flow also enters the step 206 and the electronic device is directed to output the audio data with a speaker; if the result is "no", step 208 directs the electronic device to output the audio data with the receiver.

The audio output apparatus arbitrating method of the present invention is to suitably select one of the audio output apparatuses to output audio data according to the type of application program generated by the audio data; therefore, the amount of audio data output apparatus and the classification of the application programs in the electronic devices can be adjusted according to the practical requirements of the device, and are not limited by the foregoing embodiments.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An arbitrating method, which is **characterized by**:
receiving an audio data generated from an application program (202);
determining the type of the application program;
when it is determined that the application program is a real-time speech communication program, determining whether the audio data received is a ring tone by detecting an operating status of the application program, wherein
when it is determined that the application program is not a real-time speech communication program, selecting a second audio output apparatus to perform the audio data,
when it is determined that the application program is a real-time speech communication program and the audio data is a ring-tone, selecting the second audio output apparatus to perform the audio data; and
when it is determined that the application program is a real-time speech communication program and the audio data is not a ring-tone, determining whether the second audio output apparatus is set to output the audio data, if so set, selecting the second audio output apparatus to perform the audio data otherwise selecting a first audio output apparatus to perform the audio data.

2. The method as claimed in claim 1, wherein the application program has an identification for determining the type of the application program.

3. The method as claimed in claim 2, further comprising providing a look-up-table for audio output apparatus corresponding to the identifications of the application programs for selecting one of the first audio output apparatus and the second audio output apparatus to perform the audio data.

4. An electronic device with audio outputting function, the electronic device comprising:
a first audio output apparatus;
a second audio output apparatus; and
a processor used to execute an application program,
wherein an audio data is generated from the application program, the processor determines the type of the application program, wherein
when it is determined that the application program is a real-time speech communication program, determining whether the audio data received is a ring tone by detecting an operating status of the application program, wherein
when it is determined that the application program is not a real-time speech communication program, selecting a second audio output apparatus to perform the audio data,
when it is determined that the application program is a real-time speech communication program and the audio data is a ring-tone, selecting the second audio output apparatus to perform the audio data; and
when it is determined that the application program is a real-time speech communication program and the audio data is not a ring-tone, determining whether the second audio output apparatus is set to output the audio data, if so set, selecting the second audio output apparatus to perform the audio data otherwise selecting a first audio output apparatus to perform the audio data. i

5. The electronic device as claimed in claim 4, wherein the application program has an identification for determining whether the type of the application program is a real-time speech communication program.

6. The electronic device as claimed in claim 5, wherein the processor selects one of the first audio output apparatus and the second audio output apparatus outputting the audio data by utilizing a look-up-table for the identifications of the application programs.

7. The electronic device as claimed in claim 4, wherein the volume of the sound outputted from the first audio output apparatus is lower than the volume of the sound outputted from the second audio output apparatus.

## Patentansprüche

1. Ein Arbitrierungsverfahren, **gekennzeichnet durch** die Schritte:
Empfangen von Audiodaten, welche von einem Anwendungsprogramm generiert werden (202);
Ermitteln des Typs des Anwendungsprogramms;
Wenn ermittelt wird, dass das Anwendungsprogramm ein Echtzeit-Sprachkommunikationsprogramm ist, Ermitteln, ob die empfangenen Audiodaten ein Klingelton sind, indem ein Betriebsstatus des Anwendungsprogramms detektiert wird, wobei,
wenn ermittelt wird, dass das Anwendungsprogramm nicht ein Echtzeit-Sprachkommunikationsprogramm ist, Auswählen einer zweiten Audioausgabevorrichtung zum Vorführen der Audiodaten;
Wenn ermittelt wird, dass das Anwendungsprogramm ein Echtzeit-Sprachkommunikationsprogramm ist und die Audiodaten ein Klingelton sind, Auswählen der zweiten Audioausgabevorrichtung zum Vorführen der Audiodaten; und
Wenn ermittelt wird, dass das Anwendungsprogramm ein Echtzeit-Sprachkommunikationsprogramm ist und die Audiodaten nicht ein Klingelton sind, Ermitteln, ob die zweite Audioausgabevorrichtung zum Ausgeben der Audiodaten festgelegt ist, wenn so festgelegt, Auswählen der zweiten Audioausgabevorrichtung zum Vorführen der Audiodaten, ansonsten Auswählen einer ersten Audioausgabevorrichtung zum Vorführen der Audiodaten.

2. Das Verfahren nach Anspruch 1, wobei das Anwendungsprogramm eine Identifikation zum Ermitteln des Typs des Anwendungsprogramms aufweist.

3. Das Verfahren nach Anspruch 2, ferner aufweisend:
Bereitstellen einer Nachschlagetabelle für eine Audioausgabevorrichtung korrespondierend zu den Identifikationen der Anwendungsprogramme zum Auswählen einer von der ersten Audioausgabevorrichtung und der zweiten Audioausgabevorrichtung zum Vorführen der Audiodaten.

4. Ein elektronisches Gerät mit Audioausgabefunktion, aufweisend:
eine erste Audioausgabevorrichtung;
eine zweite Audioausgabevorrichtung; und
einen Prozessor, welcher zum Ausführen eines Anwendungsprogramms verwendet wird,
wobei Audiodaten von dem Anwendungsprogramm generiert werden und der Prozessor den Typ des Anwendungsprogramms ermittelt, wobei,
wenn ermittelt wird, dass das Anwendungsprogramm ein Echtzeit-Sprachkommunikationsprogramm ist, Ermitteln, ob die empfangenen Audiodaten ein Klingelton sind, indem ein Betriebsstatus des Anwendungsprogramms detektiert wird, wobei,
wenn ermittelt wird, dass das Anwendungsprogramm nicht ein Echtzeit-Sprachkommunikationsprogramm ist, Auswählen einer zweiten Audioausgabevorrichtung zum Vorführen der Audiodaten,
wenn ermittelt wird, dass das Anwendungsprogramm ein Echtzeit-Sprachkommunikationsprogramm ist und die Audiodaten ein Klingelton sind, Auswählen der zweiten Audioausgabevorrichtung zum Vorführen der Audiodaten; und
wenn ermittelt wird, dass das Anwendungsprogramm ein Echtzeit-Sprachkommunikationsprogramm ist und die Audiodaten nicht ein Klingelton sind, Ermitteln, ob die zweite Audioausgabevorrichtung zum Ausgeben der Audiodaten festgelegt ist, wenn so festgelegt, Auswählen der zweiten Audioausgabevorrichtung zum Vorführen der Audiodaten, ansonsten Auswählen einer ersten Audioausgabevorrichtung zum Vorführen der Audiodaten.

5. Das elektronische Gerät nach Anspruch 4, wobei das Anwendungsprogramm eine Identifikation zum Ermitteln, ob der Typ des Anwendungsprogramms ein Echtzeit-Sprachkommunikationsprogramm ist, aufweist.

6. Das elektronische Gerät nach Anspruch 5, wobei der Prozessor eine von der ersten Audioausgabevorrichtung und der zweiten Audioausgabevorrichtung, welche die Audiodaten vorführt, auswählt unter Verwendung einer Nachschlagetabelle für die Identifikationen der Anwendungsprogramme.

7. Das elektronische Gerät nach Anspruch 4, wobei die Lautstärke des Tons, welcher von der ersten Audioausgabevorrichtung ausgegeben wird, niedriger ist als die Lautstärke des Tons, welcher von der zweiten Audioausgabevorrichtung ausgegeben wird.

## Revendications

1. Procédé d'arbitrage, qui est **caractérisé par** :
la réception d'une donnée audio générée par un programme d'application (202) ;
la détermination du type du programme d'application ;
quand on détermine que le programme d'application est un programme de communication de la voix en temps réel, déterminer si la donnée audio reçue est une sonnerie en détectant un état de fonctionnement du programme d'application, dans lequel :
quand on détermine que le programme d'application n'est pas un programme de communication de la voix en temps réel, sélectionner un second appareil de sortie audio afin de lire la donnée audio ;
quand on détermine que le programme d'application est un programme de communication de la voix en temps réel et que la donnée audio est une sonnerie, sélectionner le second appareil de sortie audio afin de lire la donnée audio ; et
quand on détermine que le programme d'application est un programme de communication de la voix en temps réel et que la donnée audio n'est pas une sonnerie, déterminer si le second appareil de sortie audio est réglé de façon à délivrer en sortie la donnée audio, s'il est ainsi réglé, sélectionner le second appareil de sortie audio afin de lire la donnée audio, sinon sélectionner un premier appareil de sortie audio afin de lire la donnée audio.

2. Procédé selon la revendication 1, dans lequel le programme d'application présente une identification pour déterminer le type du programme d'application.

3. Procédé selon la revendication 2, comprenant en outre la fourniture d'une table de consultation pour l'appareil de sortie audio correspondant aux identifications des programmes d'applications de manière à sélectionner l'un du premier appareil de sortie audio et du second appareil de sortie audio afin de lire la donnée audio.

4. Dispositif électronique doté d'une fonction de sortie audio, le dispositif électronique comprenant :
un premier appareil de sortie audio ;
un second appareil de sortie audio ; et
un processeur utilisé pour exécuter un programme d'application ;
dans lequel une donnée audio est générée à partir du programme d'application, le processeur détermine le type du programme d'application, dans lequel :
quand on détermine que le programme d'application est un programme de communication de la voix en temps réel, déterminer si la donnée audio reçue est une sonnerie en détectant un état de fonctionnement du programme d'application, dans lequel :
quand on détermine que le programme d'application n'est pas un programme de communication de la voix en temps réel, sélectionner un second appareil de sortie audio afin de lire la donnée audio ;
quand on détermine que le programme d'application est un programme de communication de la voix en temps réel et que la donnée audio est une sonnerie, sélectionner le second appareil de sortie audio afin de lire la donnée audio ; et
quand on détermine que le programme d'application est un programme de communication de la voix en temps réel et que la donnée audio n'est pas une sonnerie, déterminer si le second appareil de sortie audio est réglé de façon à délivrer en sortie la donnée audio, s'il est ainsi réglé, sélectionner le second appareil de sortie audio afin de lire la donnée audio, sinon sélectionner un premier appareil de sortie audio afin de lire la donnée audio.

5. Dispositif électronique selon la revendication 4, dans lequel le programme d'application présente une identification pour déterminer si le type du programme d'application est un programme de communication de la voix en temps réel.

6. Dispositif électronique selon la revendication 5, dans lequel le processeur sélectionne l'un du premier appareil de sortie audio et du second appareil de sortie audio destiné à délivrer en sortie la donnée audio en utilisant une table de consultation pour les identifications des programmes d'applications.

7. Dispositif électronique selon la revendication 4, dans lequel le volume du son délivré en sortie par le premier appareil de sortie audio est inférieur au volume du son délivré en sortie par le second appareil de sortie audio.
